## Europäisches Patentamt
## European Patent Office
## Office européen des brevets

(19)

(11) Numéro de publication: **0 128 785**
**B1**

(12) # FASCICULE DE BREVET EUROPEEN

(45) Date de publication du fascicule du brevet:
**26.08.87**

(51) Int. Cl.⁴: **G 21 C 19/40**

(21) Numéro de dépôt: **84400746.8**

(22) Date de dépôt: **13.04.84**

(54) **Structure et ensemble de moyens pour le rangement d'éléments combustibles.**

(30) Priorité: **13.04.83 FR 8306041**

(43) Date de publication de la demande:
**19.12.84 Bulletin 84/51**

(45) Mention de la délivrance du brevet:
**26.08.87 Bulletin 87/35**

(84) Etats contractants désignés:
**AT BE CH DE GB IT LI LU NL SE**

(56) Documents cités:
**EP - A - 0 061 043
DE - A - 2 235 796
US - A - 3 377 252**

(73) Titulaire: **SOCIETE POUR LES TRANSPORTS DE
L'INDUSTRIE NUCLEAIRE TRANSNUCLEAIRE, 11, rue
Christophe Colomb, F-75008 Paris (FR)**

(72) Inventeur: **Foussard, Jean-François Jackie Antoine,
75 avenue du Maréchal Foch, F-95460 Ezanville (FR)**

(74) Mandataire: **Bonnetat, Christian et al, Cabinet PROPI
Conseils 23 rue de Léningrad, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit
être formée par écrit et motivée. Elle n'est réputée formée qu'après paiement de la taxe d'opposition (Art. 99(1) Convention sur le
brevet européen).

## Description

La présente invention concerne un ensemble de moyens poir le rangement d'éléments combustibles nucléaires dont la criticité peut être contrôlée au moyen de barres de poison neutronique s'insérant au sein de leur masse: de tels éléments sont en particulier ceux du type destiné aux réacteurs à eau pressurisée, désignés par l'abréviation REP.

On sait que les éléments de ce type ont la forme d'un prisme droit ayant une section carrée d'environ 20 cm de côté et sont constitués par un faisceau de crayons combustibles, agencés parallèlement les uns aux autres pour former un réseau de par régulier et que lesdites barres s'insèrent dans des tubes-guides ouverts à leur extrémité supérieure qui remplacent, à l'intérieur dudit réseau, certains desdits crayons. De telles barres sont par exemple constituées par une gaine d'acier inoxydable renfermant une matière absorbant les neutrons, telle que le bore.

Lorsque lesdits éléments se trouvent dans le cœur du réacteur, leur criticité est contrôlée par lesdites barres, certaines étant fixes et les autres reliées à des dispositifs commandant leur enfoncement dans les tubes-guides. Avant et après leur séjour dans le cœur du réacteur, ils sont habituellement rangés dans des structures appelées «racks» dans la technique, disposées dans une piscine remplie d'eau pour assurer leur blindage et, après séjour dans le cœur du réacteur, leur refroidissement rendu nécessaire par leur activation.

Pour ce faire, les «racks» sont une structure de rangement subdivisée en logements séparés les uns des autres par des parois et à l'intérieur de chacun desquels peut être logé l'un desdits éléments. A cause de la réactivité importante desdits éléments, il est indispensable, pour éviter tout risque de criticité par réaction entre des éléments voisins, que leurs logements soient séparés par une épaisseur d'eau suffisante qui tient compte des caractéristiques desdits éléments et de la quantité de poison neutronique que l'on fixe aux parois desdits logements. Bien entendu, il serait avantageux de pouvoir réduire l'épaisseur des séparations, puisqu'alors la capacité de stockage d'une piscine pourrait être accrue.

Après un séjour plus ou moins long en piscine, les éléments combustibles irradiés sont conduits vers un lieu de stockage ou de retraitement. Pour cela, ils sont chargés en piscine dans des conteneurs de transport et/ou de stockage. De tels conteneurs sont équipés intérieurement d'une structure de rangement, que nous appellerons également «rack», subdivisée en logements séparés les uns des autres par des parois de séparation et à l'intérieur de chacun desquels peut être introduit et logé un desdits éléments. Afin de contrôler dans le conteneur rempli d'eau la criticité des éléments combustibles, les parois de séparation desdits logements comportent habituellement un poison neutronique et des évidements pouvant atteindre plusieurs centimètres d'épaisseur. Cela se traduit par une réduction de la capacité desdits conteneurs: par exemple, un conteneur connu, dont les diamètres intérieur et extérieur sont respectivement de 1,220 m et 2,5 m, ne contient que douze éléments.

Pour accroître, à volume égal, la capacité des racks de stockage en piscine et en conteneur, une méthode connue prévoit d'insérer dans les tubes-guides des éléments des barres de poison neutronique réunies en grappe, de préférence verrouillable par rapport à la tête de l'élément combustible.

Ainsi, les éléments empoisonnés dans leur masse peuvent être stockés dans les racks d'un encombrement moindre, les épaisseurs des lames d'eau pouvant être réduites ou supprimées. Mais, comme on n'est jamais sûr, par suite d'une erreur, qu'un élément non empoisonné ne puisse être introduit dans un logement d'un tel rack, cette méthode ne s'est pas développée.

La présente invention remédie à cet inconvénient.

A cette fin, selon l'invention, l'ensemble de moyens comprenant une structure subdivisée en logements séparés par des parois pour le rangement d'éléments combustibles nucléaires, formés d'un faisceau de crayons combustibles et de tubes-guides dans lesquels sont introduites des barres de poison neutronique réunies en grappe et contrôlant leur criticité dans la structure et un organe de manutention des éléments, est caractérisé en ce que l'on associe à chacun desdits logements des moyens d'obstruction, en ce que ledit organe de manutention coulisse dans une cloche qui peut contenir l'élément combustible, en ce que le bord inférieur de ladite cloche comporte des moyens susceptibles de coopérer avec lesdits moyens d'obstruction des logements pour les effacer au moment de l'introduction d'un tel élément et en ce que l'organe de manutention spécifique desdits éléments combustibles ne peut les saisir que s'ils sont munis de barres de poison neutronique.

Lesdits moyens d'obstruction peuvent être montés sur la structure elle-même. En variante, ledit ensemble selon l'invention peut être caractérisé en ce que:

– des premiers moyens d'obstruction sont montés sur la structure elle-même;

– des seconds moyens d'obstruction sont montés sur un système intermédiaire susceptible d'être amené devant lesdits logements;

– l'effacement desdits premiers moyens d'obstruction est commandé par ledit système intermédiaire; et

– l'effacement desdits seconds moyens d'obstruction est commandé par ledit organe de manutention spécifique.

Ainsi selon l'invention, grâce auxdits moyens d'obstruction, audit organe de manutention spécifique et à ladite cloche, on est sûr de n'introduire dans les racks que des éléments combustibles obligatoirement pourvus de leurs barres de poison neutronique et on peut alors, en toute sécurité, tirer parti de la présence obligatoire desdites barres pour réduire l'épaisseur des parois des racks au minimum.

Par exemple, en ce qui concerne les conteneurs, on peut envisager une importante réduction de l'épaisseur des parois des logements qui éventuellement accompagnée d'une faible augmentation du diamètre intérieur du conteneur, permet alors d'augmenter notablement le nombre des logements et donc le nombre des éléments combustibles logés dans le conteneur. Ainsi, si l'on fait passer le diamètre intérieur du conteneur de 1,220 m à 1,430 m et si l'on ramène, grâce à l'invention, l'épaisseur des parois des logements de 34 mm à 8 mm, il est possible de loger 24 éléments et non plus 12 comme dans l'exemple du conteneur connu mentionné ci-dessus.

On remarquera que l'augmentation du diamètre intérieur du conteneur peut ne pas s'accompagner de l'augmentation du diamètre extérieur de celui-ci, par exemple si on laisse séjourner en piscine les éléments combustibles plus longtemps.

Ladite grappe peut être rendue solidaire de l'élément combustible par des moyens de verrouillage et ledit organe de manutention peut être susceptible de coopérer avec manutentionner l'ensemble.

En variante, ladite grappe coopère avec ledit organe de manutention spécifique pour permettre à ce dernier de saisir l'élément combustible par la prise utilisée habituellement par l'organe de manutention standard.

Les figures du dessin annexé feront bien comprendre comment l'invention peut être réalisée. Sur ces figures des références identiques désignent des éléments semblables.

La figure 1 est une vue, avec coupe partielle selon la ligne I-I de la figure 3, d'un exemple d'élément combustible auquel peut s'appliquer la présente invention.

La figure 2 montre partiellement l'élément combustible de la figure 1 duquel on a ôté les crayons combustibles, afin d'en laisser apparaître la structure.

La figure 3 est une vue de dessus, selon la flèche III de la figure 1, de l'embout supérieur de l'élément combustible.

La figure 4 est une coupe transversale selon la ligne IV-IV de la figure 2.

La figure 5 montre un exemple de réalisation d'une grappe de barres de poison neutronique pour le contrôle de la criticité des éléments rangés dans un rack, selon le principe de la présente invention.

La figure 6 est une vue en coupe selon la ligne VI-VI de la figure 5.

La figure 7 est une vue selon la flèche VII de la figure 5.

La figure 8 illustre partiellement la mise en place de la grappe des figures 5 à 7 dans l'élément combustible de la figure 1 au moyen d'un grappin spécifique.

La figure 9 illustre une vue en coupe d'un grappin selon l'invention suivant la ligne IX-IX de la figure 10.

La figure 10 est une vue en coupe suivant la ligne X-X de la figure 9.

Les figures 11 à 14 illustrent schématiquement plusieurs étapes de la mise en œuvre de la présente invention, lorsque les moyens d'obstruction sont montés à l'entrée des logements du rack de rangement.

Les figures 15 et 16 illustrent, respectivement, en coupe longitudinale et en vue de dessus partielles, un mode de réalisation de moyens d'obstruction montés à l'entrée des logements d'un rack de rangement, ainsi que la coopération de ces moyens d'obstruction avec les moyens de déverrouillage associés au grappin spécifique de manutention des éléments combustibles pourvus de leur grappe de poison neutronique pour le contrôle de leur criticité.

Les figures 17 et 18 illustrent, respectivement en vue de dessus et en vue de face, une variante de réalisation des moyens d'obstruction montés à l'entrée des logements d'un rack de rangement.

Les figures 19 à 21 illustrent les étapes de la mise en œuvre de la présente invention, lorsque l'introduction des éléments dans le rack est prévue par l'intermédiaire d'une structure amovible telle qu'une goulotte, elle-même munie de moyens d'obstruction.

La figure 22 est une vue schématique du dessus d'un rack dont les entrées des logements sont obturées par une grille mobile.

La figure 23 est une vue du dessus d'une structure amovible munie de goulottes de centrage des éléments et de moyens d'obstruction de celles-ci dont l'effacement est commandé par le grappin spécifique.

La figure 24 est une coupe selon la ligne XXIV-XXIV de la figure 23.

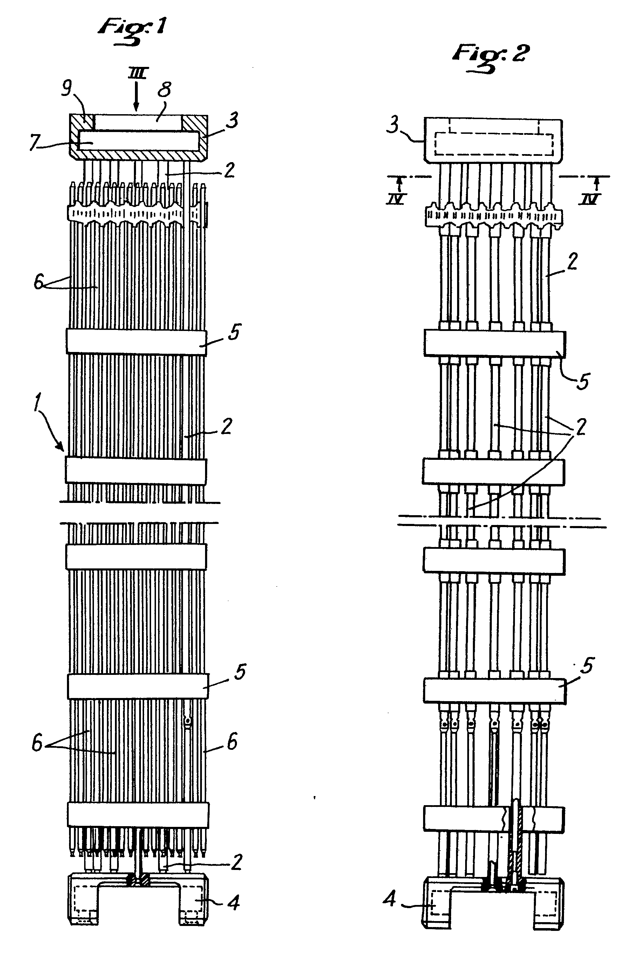

L'élément combustible 1 de type PWR, illustré sur les figures 1 et 2, présente une longueur de l'ordre de quatre mètres et une structure constituée de tubes-guides longitudinaux parallèles 2, solidaires à leurs extrémités d'un embout supérieur 3 et d'un embout inférieur 4 et maintenus de place en place par des grilles intermédiaires 5. De plus, il comprend une pluralité de crayons combustibles 6, qui ne sont pas représentés sur la figure 2, afin de laisser apparaître les tubes-guides 2. Les crayons combustibles 6 sont par exemple au nombre 264, répartis en un réseau carré de 17 × 17 crayons, les tubes-guides 2, alors au nombre de 25 (voir la figure 4), occupant les emplacements du réseau laissés libres par lesdits crayons combustibles 6.

Les tubes-guides 2 sont prévus (sauf le tube-guide central 2 prévu pour l'introduction d'une instrumentation) pour permettre l'insertion au sein du réseau des crayons combustibles 6 de barres de contrôle (non représentées) de poison neutronique destinées à contrôler la criticité de l'élément, lorsque celui-ci est disposé dans le cœur d'un réacteur.

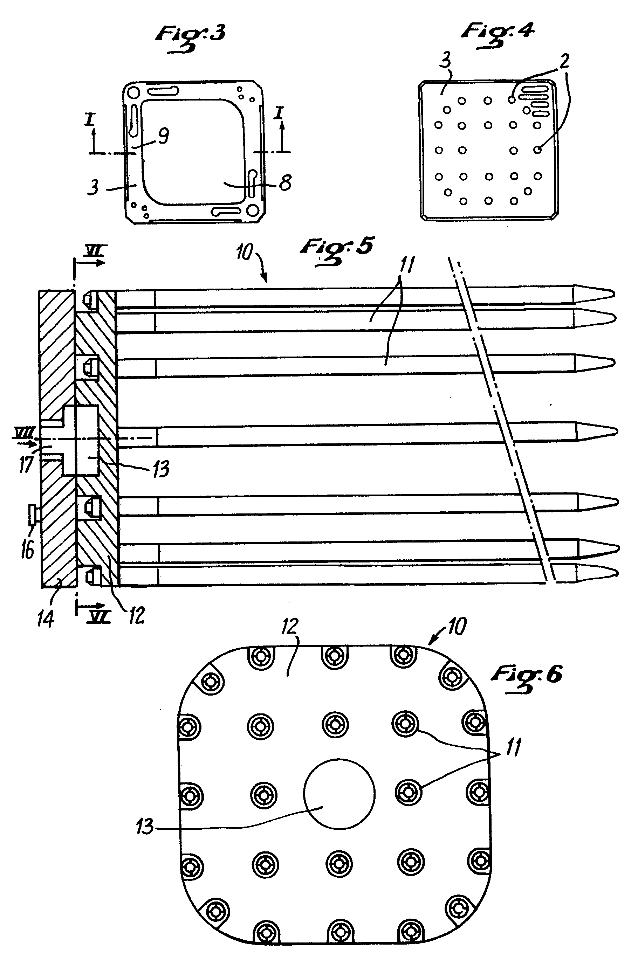

Comme on peut le voir sur les figures 1 et 3, l'embout supérieur 3 présente la forme d'une plaque épaisse, dans laquelle est ménagé un évidement central 7, relié à l'extérieur par une ouverture sensiblement carrée 8, de plus petite dimension, de sorte qu'il en résulte un rebord périphérique 9.

Ce rebord périphérique 9 est utilisé comme prise pour les grappins de manutention de l'élément 1, notamment lorsque celui-ci, après avoir séjourné dans un réacteur, doit être introduit dans un rack de stockage en piscine.

Selon l'invention, on prévoit pour l'élément combustible 1 destiné à être transféré en piscine ou dans un conteneur en vue de son stockage ou de son transport, une grappe 10 de barres 11 de poison neutronique destinée à contrôler la criticité dudit élément combustible 1.

Pour cela, les barres 11 sont prévues pour pouvoir être introduites dans les tubes-guides 2, prévus pour les barres de contrôle de criticité en réacteur.

Dans le mode de réalisation des figures 5, 6, et 7, les barres de poison neutronique 11 de la grappe 10 sont agencées selon une disposition analogue à celle desdits tubes-guides 2 (comparer les figures 4 et 6, qui toutefois ne sont pas à la même échelle) et sont réunies par une plaque de base 12, de forme sensiblement carrée et pourvue d'un évidement central 13.

Sur la plaque de base 12, du côté opposé aux barres, est montée une plaque mobile 14 de forme identique à celle de la plaque 12, mais pouvant tourner dans son plan autour de l'axe commun desdites plaques. A cet effet, on prévoit par exemple, dans la plaque 14, un jeu de lumières 15, traversées par des pions 16, solidaires de la plaque 12. La plaque 14 est percée centralement d'une ouverture 17, par exemple en forme de croix, de plus petite dimension que l'évidement central 13 de la plaque 12.

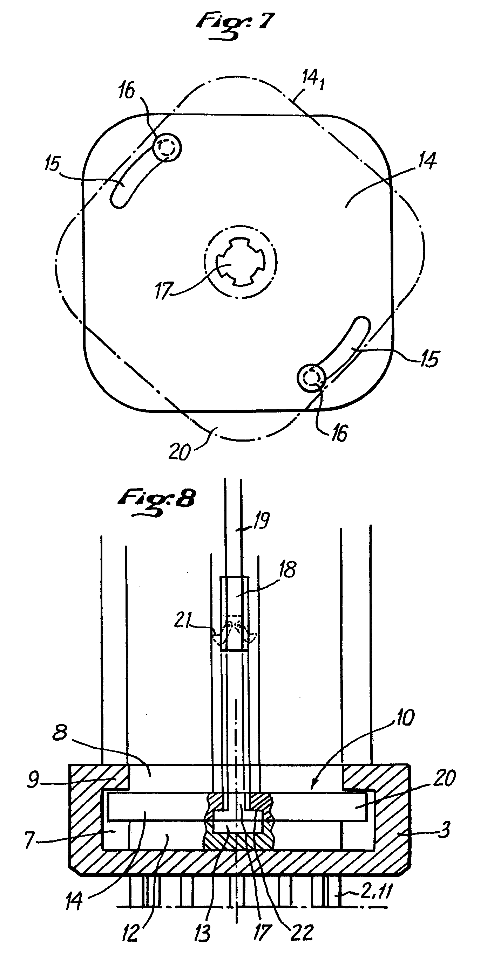

L'ouverture 17 sert de prise à un outil (par exemple le grappin 18 montré sur la figure 8) pour faire tourner la plaque 14 autour de l'axe commun des plaques 12 et 14, de façon à amener ladite plaque dans la position 14₁ représentée en trait mixte sur la figure 7.

Par ailleurs, les dimensions des plaques 12 et 14 sont choisies pour que celles-ci puissent être introduites, lorsqu'elles sont exactement superposées, dans l'ouverture 8 de l'embout 3 de l'élément combustible 1. De plus, l'épaisseur total des plaques 12 et 14 est inférieure à la profondeur de l'évidement 7 dudit embout 3 et en position tournée 14₁, les angles 20 de la plaque 14 saillant à l'extérieur du contour de la plaque 12, se trouvent en-dessous dudit rebord 9.

Ainsi, on conçoit aisément que le grappin 18, de forme correspondant à celle de l'ouverture centrale 17 de la plaque 14, et actionné par sa tige de manœuvre 19, peut être introduit dans ladite ouverture centrale 17, ses crochets 21 étant alors rétractés. Après cette introduction, le grappin 18 peut procéder à la superposition exacte des plaques 12 et 14 par rotation de la plaque 14 par rapport à la plaque de base 12 et les maintenir dans cette position par un moyen de verrouillage non représenté puis, ses crochets 21 étant expansés pour prendre appui contre l'épaulement 22 se trouvant entre l'évidement central 13 et l'ouverture 17, saisir la grappe 10 pour l'introduire dans l'élément combustible 1 à travers l'embout 3.

Les barres de poison neutronique 11 pénètrent alors dans les tubes-guides 2 et les plaques 12 et 14 dans l'évidement 7. Après mise en place (voir la figure 8), la plaque 14 est déverrouillée de la plaque 12 puis tournée par le grappin 18 en position 14₁ pour que ses coins saillants 20 prennent appui sous le rebord 9 et maintenue dans cette position par um moyen de blocage non représenté.

A partir du moment où la grappe 10 est verrouillée dans l'élément 1, ce dernier peut être manutentionné par le grappin 18, notamment en vue de son introduction dans un logement de rack. Par ailleurs, lorsque la grappe 10 n'est pas en place dans l'élément combustible 1, le grappin est de dimension trop petite pour que ses crochets puissent prendre appui derrière le rebord 9, ce qui exclut toute possibilité de préhension au moyen du grappin 18 d'un élément 1 non muni d'une grappe 10.

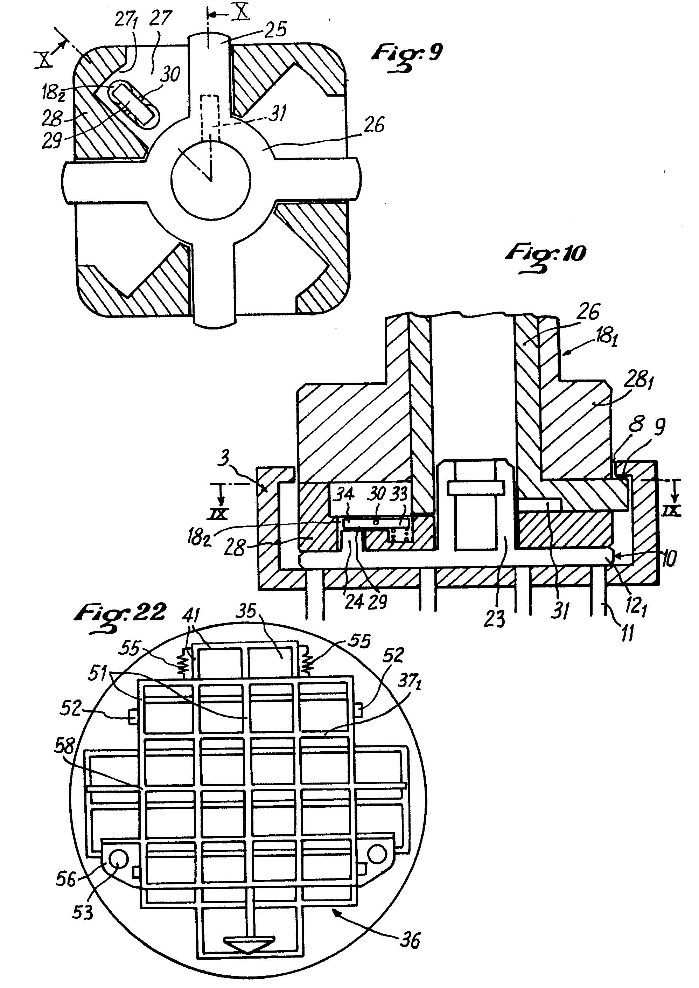

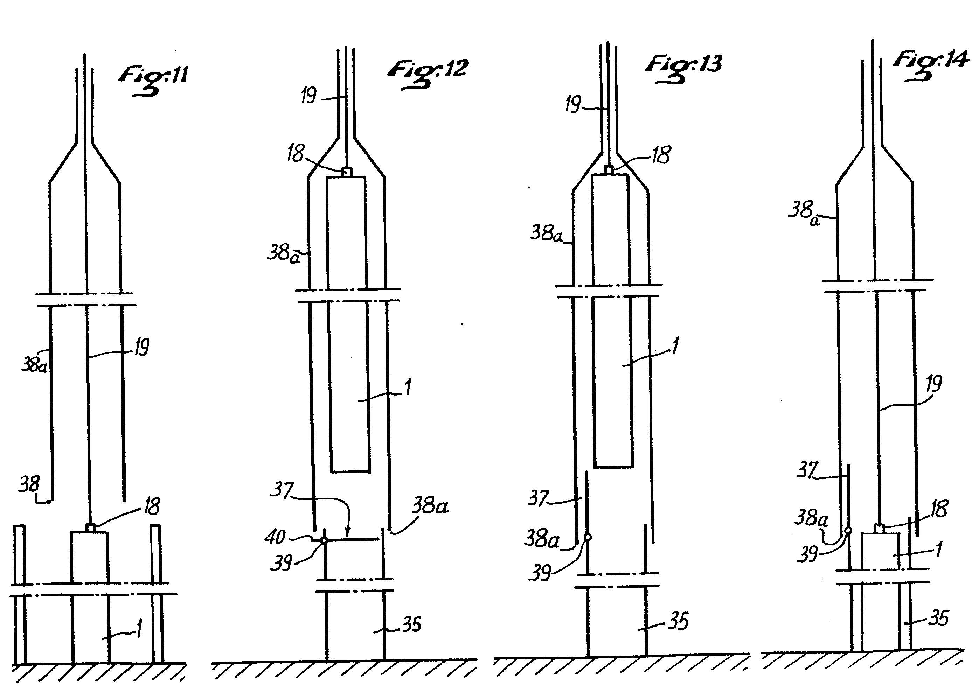

Dans le mode de réalisation des figures 9 et 10, les barres 11 sont agencées selon une disposition analogue à celle des tubes-guides 2 et sont réunies par une plaque 12₁ de forme sensiblement carrée.

Sur la plaque 12₁, du côté opposé aux barres 11, est monté en son centre un organe de manutention 23 (qui peut avoir la même configuration que celui monté sur les grappes de poison neutronique utilisées en réacteur) ainsi qu'une clef 24 destinée à coopérer avec le grappin 18₁ pour l'autoriser à saisir l'élément 1 par le rebord périphérique 9.

Le grappin 18₁ représenté sur les figures 9 et 10 est du type à doigts 25 escamotables par rotation. Lesdits doigts 25, solidaires d'un tube 26, peuvent pivoter dans les évidements 27 d'une plaque 28 de forme extérieure identique à l'ouverture 8 des éléments 1 et, en position effacée, ils sont verrouillés dans des creux 27₁ ménagés dans les angles de ladite plaque 28 par la queue 33 du verrou 29.

En effet ce dernier pivote autour d'un axe 30 solidaire de la plaque 28 et sous l'action du ressort 32 sa queue 33 est repoussée dans l'évidement 31 du doigt 25 et son autre extrémité 34 empiette sur le trou 18₂ dont la position et la forme sont telles qu'il peut recevoir la clef 24 d'une grappe 10.

Par ailleurs, la plaque 28 est solidaire d'un corps creux 28₁ traversée en son milieu par le tube 26, rendant ainsi prisonniers les doigts 25 qui, une fois le verrou 29 effacé, peuvent pivoter sous l'action du tube 26 et faire saillie de la plaque 28 et du corps creux 28₁, pour former 4 points d'appui pour la préhension.

On comprend ainsi que la grappe 10 étant en position dans l'élément 1, lorsque le grappin 18₁ pénètre dans l'ouverture 8 de l'élément 1 par sa plaque 28, la clef 24 de la grappe 10 rentre dans le trou 18₂ du grappin 18₁, repousse l'extrémité 34 du verrou 29 dégageant ainsi la queue 33 de l'évidement 31 des doigts 25 qui sont alors déverrouillés et peuvent pivoter par l'action du tube 26 pour être amenés sous le rebord périphérique 9 de l'élément 1.

Selon une autre particularité de l'invention, l'extrémité des logements 35 d'un rack de rangement 36, dans lequel doivent être introduits des éléments 1, est munie de moyens d'obstruction 37, dont l'effacement est commandé par une clef 38 associée audit grappin 18. Sur les figures 11 à 14, on a représenté schématiquement quelques étapes de la mise en œuvre de l'invention.

Sur ces figures, on a représenté schématiquement les moyens d'obstruction 37 d'un logement 35 sous la forme d'un volet articulé en 39, sur la paroi dudit logement et pourvu d'une queue de commande 40. Par ailleurs, à des fins de simplification, on n'a représenté qu'un seul logement individuel 35 et non pas l'ensemble des logements 35 formant la structure 36. Enfin, dans les explications concernant les figures 11 à 14, on ne fait intervenir qu'une translation verticale de la clef 38, mais il est évident que celle-ci pourrait, en fonction de la conformation des moyens d'obstruction 37, aussi bien avoir un mouvement différent.

Dans le mode de réalisation des figures 11 à 14, la clef 38 est montée à l'extrémité d'une armature 38a en forme de cloche dont la longueur est suffisamment grande pour contenir l'élément combustible 1.

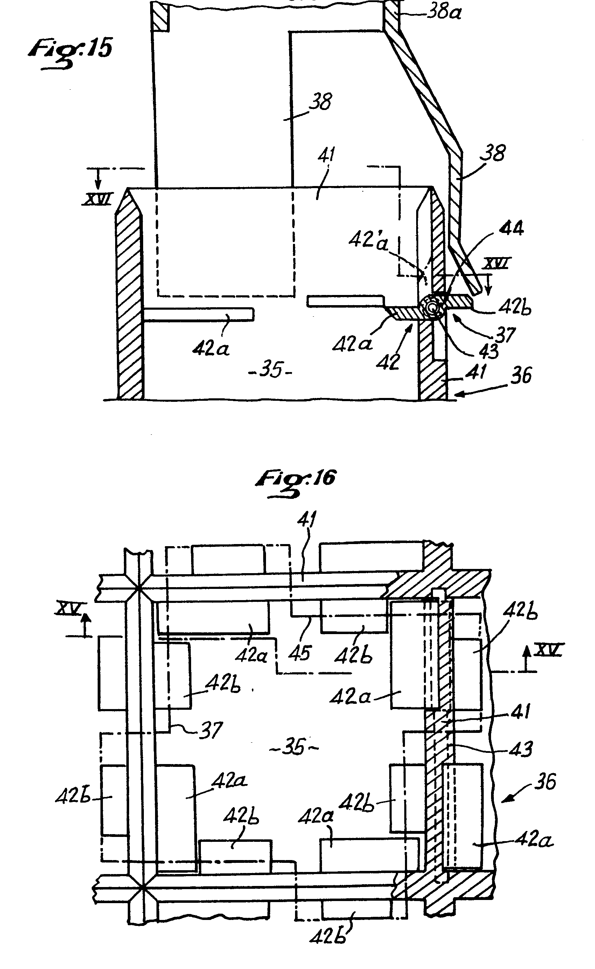

Dans un premier temps (voir la figure 11), le grappin 18 et la cloche 38a sont amenés au-dessus de l'élément combustible 1 et le grappin 18 est descendu jusqu'à ce qu'il puisse saisir ledit élément, de la façon illustrée par les figures 8, 9 ou 10. Ensuite (voir la figure 12), le grappin 18 est rétracté dans la cloche 38a, de façon que l'élément 1 y pénètre et l'ensemble de la cloche 38a, de l'élément 1 et du grappin 18 est déplacé jusqu'à venir à l'aplomb d'un logement 35, obstrué par son clapet 39. La clef 38 appuie sur la queue de commande 40 dudit clapet 39, de sorte que celui-ci s'ouvre (figure 13).

Enfin, le clapet 39 étant maintenu ouvert par la clef 38, le grappin 18 est abaissé et l'élément 1 est introduit à l'intérieur du logement 35 (figure 14).

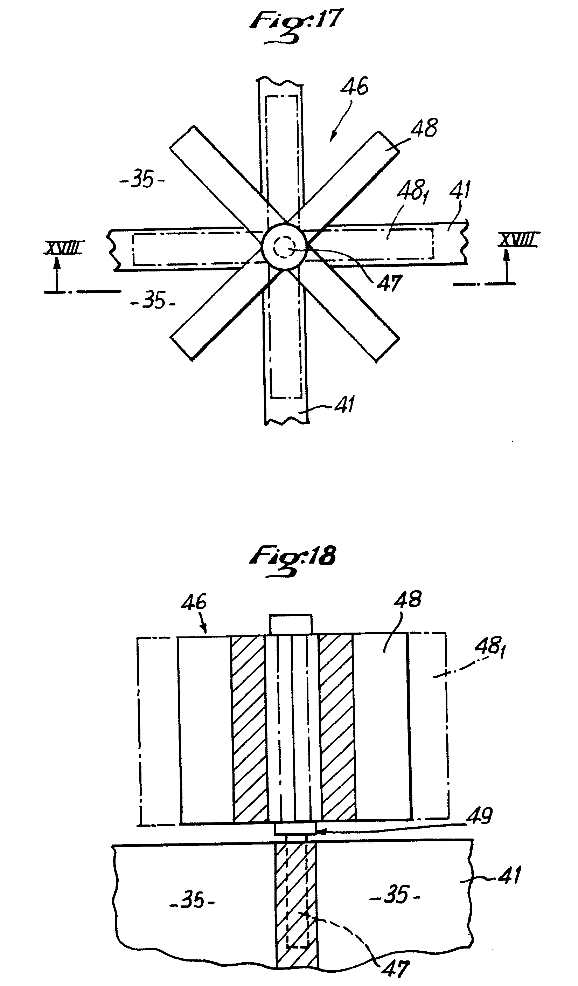

Sur les figures 15 et 16, on a représenté un logement 35 du rack 36, délimité des autres logements 35 adjacents par des cloisons de séparation 41. Dans les cloisons de séparation 41, sont agencés des loquets 42 pouvant tourner autour d'axes horizontaux 43 et chargés par des ressorts 44. Chaque loquet 42 comporte une aile de verrouillage 42a faisant saillie dans le logement 35 à obturer et une aile de commande 42b faisant saillie dans l'un des logements 35 adjacents. Dans l'exemple des figures 15 et 16, on a prévu quatre loquets 42 par logement 35. Par ailleurs, le bord inférieur de la cloche 38a est conformé en quatre clefs 38, entourant le logement 35 à déverrouiller et susceptible de presser chacun une aile 42b d'un loquet 42 pour faire pivoter l'aile de verrouillage 42a de celui-ci vers le haut (position 42'a), à l'encontre de l'action du ressort 44 correspondant, c'est-à-dire déverrouiller l'entrée du logement 35. Sur la figure 16, on a délimité par une ligne 45 en trait mixte, la projection du contour des clefs 38 dans le plan des ailes de commande 42b.

Dans le mode de réalisation des figures 17 et 18, les moyens d'obstruction 37 sont formés par des tourniquets 46, tourillonnés autour d'axes verticaux 47 agencés à l'intersection des cloisons de séparation 41 et dont les ailes 48 font saillie à l'aplomb des logements 35 sous l'action d'un ressort de rappel 49. Les clefs 38 prévues à l'extrémité de la cloche 38a sont alors conformées en doigts présentant un bord en hélice (non représenté), et la descente de la cloche 38a amène les ailes 48 dans la position de déverrouillage $48_1$, à l'aplomb des cloisons 41, du fair de leur coopération avec ledit bord en hélice.

Dans les modes de réalisation des figures 11 à 18, les moyens d'obstruction 37, 42 et 46 sont agencés directement dans les parois 41 de séparation des logements 35. Or, il peut se produire que ces parois 41 soient choisies tellement minces que le centrage des éléments 1 par rapport aux logements 35 devienne difficile. Aussi, selon une variante de la mise en œuvre, représentée schématiquement par les figures 19, 20 et 21 on prévoit une plaque amovible intermédiaire 50, munie de moyens d'obstruction $37_2$ et dont la mise en place sur le rack 36 provoque l'effacement des moyens d'obstruction $37_1$ montés à l'entrée des logements 35.

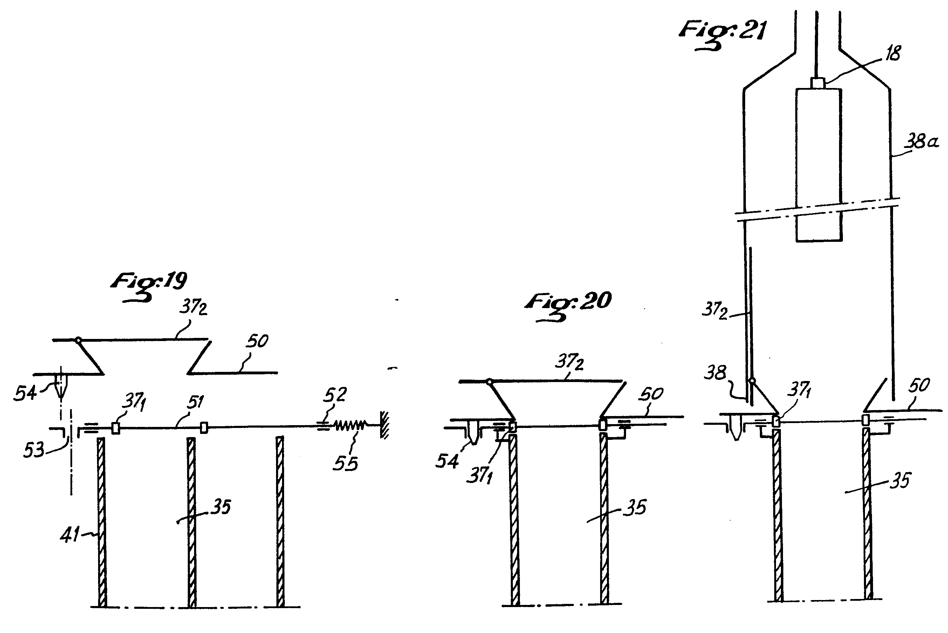

Dans les vues schématiques des figures 19 et 20, les logements 35 song obturés par des barres horizontales $37_1$ susceptibles de se déplacer dans un plan horizontal pour venir exactement à l'aplomb des cloisons 41, Lesdites barres $37_1$ sont maintenues entre elles par une structure 51 liée au rack 36 par des glissières 52 et maintenue en position d'obstruction par des ressorts 55. De plus, la structure 51 comporte des trous 53 et la plaque 50 est munie de doigts de commande 54, de forme conique par exemple, qui, lorsque ladite plaque 50 est abaissée, viennent coopérer avec les trous 53 pour faire déplacer les moyens d'obstruction $37_1$ et les amener à l'aplomb des cloisons 41.

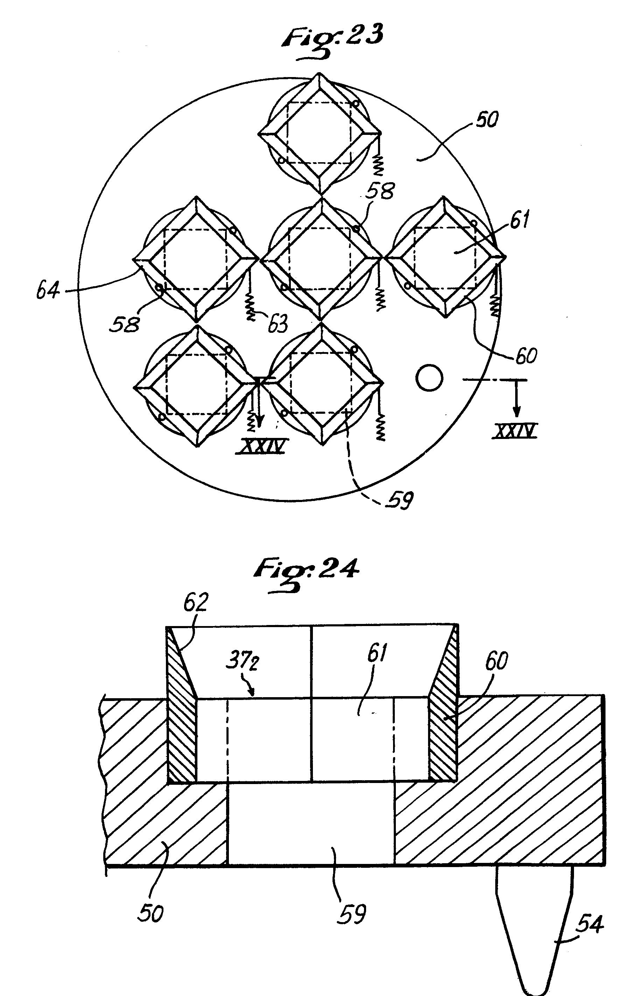

La figure 21 montre schématiquement l'étape ultérieure de l'introduction d'un élément 1, à l'aide d'un grappin 18 muni d'une clef 38, dans un logement 35 d'un rack 36 par l'intermédiaire d'une plaque 50.

Un exemple de réalisation mettant en œuvre une plaque amovible 50 pour faciliter le centrage des éléments 1 est illustré par les figures 22 à 24.

Sur la figure 22, on a représenté, en vue de dessus, un rack 36 subdivisé en logements 35 par des parois 41. A sa partie supérieure on a disposé une grille 58 formée des barres $37_1$ et 51 et montée sur des glissières 52. Cette grille 58 reproduit la géométrie des logements 35 et peut se superposer exactement aux parois 41, mais sous l'action des ressorts 55, les barres $37_1$ obturent en partie chacun des logements 35 du rack 36.

Dans le cas d'un rack 36 équipant un conteneur, les glissières 52 sont mobiles parallèlement à l'axe des logements 35 pour éviter les risques de détérioration en cours de transport de la grille 58 sur laquelle butent les éléments 1.

Pour commander son déplacement horizontal la grille 58 est munie de plaques 56 percées de trous 57 dont un bord vient en concordance avec l'axe des doigts 54 de la plaque amovible 50. Ainsi lors de la descente de la plaque 50, les doigts 54 de forme conique par exemple, vont venir appuyer sur un bord des trous 53 et déplacer les barres $37_1$ pour les mettre en parfaite concordance avec les parois 41 des logements 35 du rack 36.

Par ailleurs, la plaque 50 comporte une pluralité d'ouvertures 59 de dimensions et de positions correspondant à celles des logements 35, mais en nombre inférieur, chacun des logements 35 pouvant être recouvert par une ouverture 59, lorsque la plaque 50, amenée en superposition à la grille 58, tourne autour de son axe vertical pour prendre une pluralité de positions angulaires successives. Par exemple, si le nombre des logements 35 est de vingt-quatre comme représenté, le nombre des ouvertures 59 est de six et en quatre quarts de tours, chacun desdits logements se trouve en coïncidence avec une ouverture 59. De plus, dans la plaque 50 sont prévus des noyaux rotatifs 60, coaxiaux auxdites ouvertures 59 et traversés eux-mêmes par une ouverture 61 de forme et de dimension identiques à celles de ces dernières mais surmontés d'un tronc de pyramide 62 facilitant le centrage des éléments 1. Lesdits noyaux 60 sont maintenus en position d'obstruction de l'ouverture 59 par un ressort de rappel 63 et constituent ainsi les moyens d'obstruction $37_2$.

En faisant tourner un noyau 60 pour amener en coïncidence les ouvertures 59 et 61, on déverrouille l'entrée du logement 35 qui est à l'aplomb de ladite ouverture 59.

Ainsi, lorsqu'à l'aide d'un dispositif de manutention (non représenté), on amène la plaque 50, dont les verrous $37_2$ obturent les ouvertures 59, à reposer sur la grille 58 du rack 36, les doigts 54 de ladite plaque 50 font déplacer les barres de verrouillage $37_1$ de la façon décrite ci-dessus. Les logements 35 ne sont plus alors obturés que par les moyens d'obstruction $37_2$ de la plaque 50. Pour dégager une ouverture 59 en vue de l'introduction d'un élément 1 dans le logement 35 en coïncidence, il suffit alors de faire tourner le noyau 60 correspondant pour que l'ouverture 61 arrive en coïncidence exacte avec cette ouverture 59. Pour ce faire, on peut par exemple prévoir sur l'armature 38a du grappin spécifique 18 des doigts 38 susceptibles de coopérer avec les faces extérieures 64 du noyau 60 et des moyens de manutention pour faire tourner ladite armature 38a autour de son axe vertical.

## Revendications

1. Ensemble de moyens comprenant une structure (36) subdivisée en logements (35) séparés par des parois (41) pour le rangement d'éléments combustibles nucléaires (1), formés d'un faisceau de crayons combustibles (6) et de tubes-guides (2) dans lesquels sont introduites des barres (11) de poison neutronique réunies en grappe (10) et contrôlant la criticité dans la structure et un organe de manutention spécifique (18) des éléments (1), caractérisé en ce que l'on associe à chacun desdits logements (35) des moyens d'obstruction (37, $37_1$, $37_2$, 48), en ce que ledit organe de manutention spécifique (18) coulisse dans une cloche (38a) qui peut contenir l'élément combustible (1), en ce que le bord inférieur de ladite cloche (38a) comporte des moyens susceptibles de coopérer avec lesdits moyens d'obstruction des logements (35) pour les effacer au moment de l'introduction d'un tel élément et en ce que l'organe de manutention spécifique (18) desdits éléments combustibles (1) ne peut les saisir que s'ils sont munis de barres (11) de poison neutronique.

2. Ensemble de moyens selon la revendication 1, caractérisé en ce que les moyens d'obstruction (37) sont montés sur la structure (36) elle-même.

3. Ensemble de moyens selon la revendication 1, caractérisé en ce que
– des premiers moyens d'obstruction ($37_1$) sont montés sur la structure elle-même;
– des seconds moyens d'obstruction ($37_2$) sont montés sur un système intermédiaire (50) susceptible d'être amené devant lesdits logements (35);
– l'effacement desdits premiers moyens d'obstruction ($37_1$) est commandé par ledit système intermédiaire (50); et
– l'effacement desdits seconds moyens d'obstruction ($37_2$) est commandé par ledit organe de manutention spécifique (18).

4. Ensemble de moyens selon l'une quelconque des revendications 1 à 3, caractérisé en ce que ladite grappe (10) est rendue solidaire de l'élément combustible (1) par des moyens de verrouillage (14, 19, 20; 25, 26) et en ce que ledit organe de manutention est susceptible de coopérer avec ladite grappe (10) pour commander les moyens de verrouillage et manutentionner l'ensemble.

5. Ensemble de moyens selon l'une quelconque des revendications 1 à 3, caractérisé en ce que ladite grappe (10) coopère avec ledit organe de manutention spécifique (18) pour permettre à ce dernier de saisir l'élément combustible (1) par la prise utilisée habituellement par l'organe de manutention standard.

## Patentansprüche

1. Einrichtungseinheit bestehend aus einer Anordnung (36), die durch Wände (41) in Gehäuse (35) unterteilt ist, die zur Anordnung der Kernbrennelemente (1) dienen, die aus einem Brennstabbündel (6) und Führungsrohren (2) bestehen, in die als Bündel (10) die Kritikalität in der Anordnung steuernde Neutronenbremsstäbe (11) eingeführt sind und ein besonderes Handhabungsorgan (18) für die Brennelemente (1) dadurch gekennzeichnet, dass jedem Gehäuse (35) Sperreinrichtungen (37, $37_1$, $37_2$, 48) zugeordnet sind, dass das besondere Handhabungsorgan (18) in einer Glocke (38a) gleitend geführt ist, die das Brennelement (1) enthalten kann, dass der untere Rand der Glocke (38a) Einrichtungen besitzt, die mit den Sperreinrichtungen der Gehäuse (35) zusammenarbeiten, um sie zu dem Zeitpunkt des Einführens eines solchen Elements zurücktreten zu lassen, und dass das Handhabungsorgan (18) der Brennelemente (1) sie nur ergreifen kann, wenn sie mit Neutronenbremsstäben (11) besetzt sind.

2. Einrichtungseinheit nach Anspruch 1, dadurch gekennzeichnet, dass die Sperreinrichtungen (37) auf der eigentlichen Anordnung (36) befestigt sind.

3. Einrichtungseinheit nach Anspruch 1, dadurch gekennzeichnet, dass erste Sperreinrichtungen ($37_1$) auf der eigentlichen Anordnung und zweite Sperreinrichtungen ($37_2$) auf einem Zwischensystem (50) angeordnet sind, das vor die Gehäuse (35) führbar ist, dass das Zurücktreten der ersten Sperreinrichtungen ($37_1$) vom Zwischensystem (50) und dass das Zurücktreten der zweiten Sperreinrichtungen ($37_2$) von dem besonderen Handhabungsorgan (18) steuerbar ist.

4. Einrichtungseinheit nach einem der Ansprüche 1 bis 3, dadurch gekennzeichnet, dass das Bündel (10) durch Verriegelungen (14, 19, 20; 25, 26) mit dem Brennelement (1) verbunden ist und dass das Handhabungsorgan mit dem Bündel (10) zusammenarbeiten kann, um die Verriegelungen zu steuern und die Einheit zu betreiben.

5. Einrichtungseinheit nach einem der vorhergehenden Ansprüche 1 bis 3, dadurch gekennzeichnet, dass das Bündel (10) mit dem Handhabungsorgan (18) zusammenarbeitet, um es diesem zu gestatten, das Brennelement (1) durch den üblicherweise von Standardführungsorgan verwendeten Übernehmer zu ergreifen.

**Claims**

1. Assembly of means comprising a structure (36) divided in housings (35) separated by walls (41) for storing nuclear combustible elements (1), consituted by a bundle of combustible sticks (6) and guiding tubes (2) in which are introduced bars (11) of neutron poison forming a cluster (10) and monitoring the criticality in the structure, and a specific handling member (18) of elements (11), characterized in that blocking means (37, $37_1$, $37_2$, 48) are associated with each of said housings (35), in that said specific handling member (18) slides in a bell (38a) which can contain the combustible element (1), in that the lower edge of said bell (38a) comprises means capable of cooperating with said blocking means of the housings (35) in order to withdraw them when such an element is introduced, and in that the specific handling member (18) of said combustible elements (1) can seize them only if they are provided with bars (11) of neutron poison.

2. Assembly of means according to claim 1, characterized in that the blocking means (37) are mounted on the structure (36) itself.

3. Assembly of means according to claim 1, characterized in that:
– first blocking means ($37_1$) are mounted on the structure itself;
– second blocking means ($37_2$) are mounted on an intermediate system (50) capable of being brought in front of said housings (35);
– the withdrawal of said first blocking means ($37_1$) is controlled by said intermediate system (50); and
– the withdrawal of said second blocking means ($37_2$) is controlled by said specific handling member (18).

4. Assembly of means according to any one of claims 1 to 3, characterized in that said cluster (10) is made fast with the combustible element (1) through locking means (14, 19, 20; 25, 26), and in that said handling member is capable of cooperating with said cluster (10) in order to control said locking means and handle the whole.

5. Assembly of means according to any one of claims 1 to 3, characterized in that said cluster (10) cooperates with said specific handling member (18) to allow the latter to seize the combustible element (1) by the grip usually used by the standard handling member.

Fig. 1

Fig. 2

Fig.3

Fig.4

Fig.5

Fig.6

*Fig. 7*

*Fig. 8*

Fig. 9

Fig. 10

Fig. 22

Fig.11  Fig.12  Fig.13  Fig.14

6/9

**Fig:15**

**Fig:16**

Fig:17

46

48

-35-

48₁  41

XVIII

47

-35-

41

Fig:18

46

48

48₁

49

-35-  -35-  41

47

Fig.19

Fig.20

Fig.21

*Fig. 23*

*Fig. 24*